# EUROPEAN PATENT SPECIFICATION

(11) **EP 1 396 111 B1**
(45) Date of publication and mention of the grant of the patent: **26.04.2006**
(21) Application number: 02727905.8
(22) Date of filing: 15.05.2002
(51) Int. Cl.: H04L 12/00

(54) **OVERLAPPING NETWORK ALLOCATION VECTOR (ONAV) FOR AVOIDING COLLISION IN THE IEEE 802.00 WLAN OPERATING UNDER HCF**
OVERLAPPING NETWORK ALLOCATION VECTOR (ONAV) ZUM VERMEIDEN VON KOLLISIONEN IN IEEE 802.00 WLAN DAS UNDER HCF BETRIEBEN WIRD
VECTEUR D'ATTRIBUTION DE RESEAU DE CHEVAUCHEMENT DESTINE A EVITER UNE COLLISION DANS LE RESEAU LOCAL SANS FIL DE LA NORME 802.00 IEEE SOUS UNE FONCTION DE COORDINATION HYBRIDE

(30) Priority: 15.05.2001 US 290940 P; 27.12.2001 US 29825
(43) Date of publication of application: 10.03.2004
(73) Proprietor: Koninklijke Philips Electronics N.V., 5621 BA Eindhoven (NL)
(72) Inventor: DEL PRADO, Javier, NL-5656 AA Eindhoven (NL); CHOI, Sunghyun, NL-5656 AA Eindhoven (NL); SOOMRO, Amjad, NL-5656 AA Eindhoven (NL)
(74) Representative: Groenendaal, Antonius W. M.
(86) International application number: PCT/IB2002/001678
(87) International publication number: WO 2002/093831

(56) References cited:
- WO-A-98/35453
- BENSAOU B ET AL: "Fair medium access in 802.11 based wireless ad-hoc networks" IEEE/ACM MOBIHOC WORKSHOP, AUG. 2000, XP010511726

## Description

The present invention relates to a wireless medium access control (MAC) protocol, and more particularly to a novel MAC protocol that may be used to avoid collisions among stations (STAs) from different overlapping basic service sets (OBSSs).

Basically, there are two variants of wireless local area networks (WLAN): infrastructure-based and ad hoc-type. In the former network, communication typically takes place only between wireless nodes, called stations (STA_{*i*}), and the access point (AP), not directly between the wireless nodes as in the latter network. Thus, the wireless nodes can exchange data via the AP. The stations and the AP, which are within the same radio coverage, are known as a basic service set (BSS). When two adjacent basic service sets (BSSs) are located close to each other and operate at the same channel, which are referred to as overlapping BSSs, it is difficult to support the required quality-of-service (QoS) due to the possible collisions among stations from different overlapping BSSs.

The IEEE 802.11 standard specifies the medium access control (MAC) and the physical (PHY) characteristics for wireless local area networks. The MAC layer is a set of protocols which is responsible for maintaining order in the use of a shared medium. The IEEE 802.11 standard is defined in International Standard ISO/IEC 8802-11, "Information Technology--Telecommunications and information exchange area networks," 1999 Edition, which is hereby incorporated by reference in its entirety.

The IEEE 802.11 provides a carrier sense multiple access with collision avoidance (CSMA/CA) protocol as well as polling mechanism for use as a random access protocol technique. Within such a network, if a transmitting unit wishes to transmit a packet, it may transmit a short request-to-send (RTS) packet containing information on the duration of the following packet. If the receiving unit receives the RTS, it responds with a short clear-to-send (CTS) packet. Then, the transmitting node sends its packet, and, when received successfully by the receiving node, the receiving node sends an acknowledgment (ACK) packet. However, a problem arises when there is a hidden transmitting station from the overlapping BSSs.

Currently, to address the above problem, the IEEE 802.11 specifies a Network Allocation Vector (NAV) as part of the virtual carrier sensing mechanism so that a STA, which is hidden from the transmitter of a frame, would not contend for the channel while the transmitter unit is occupying the channel. All STAs receiving a frame set their NAV for a given time period, using the duration/ID value contained in the frame, and utilize it jointly with their physical carrier sensing mechanism to determine if the medium is idle and, thus reducing the probability of collision.

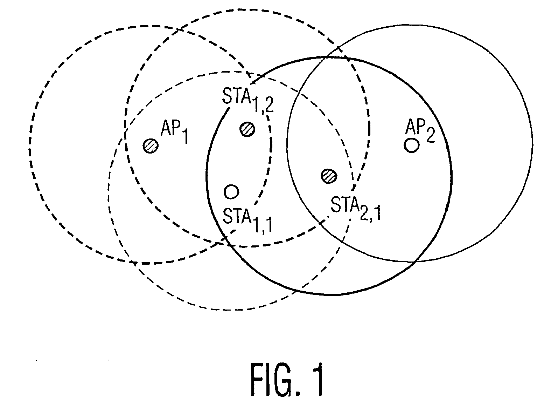

Although the NAV seems to be a plausible solution, it has some drawbacks in that if two or more overlapping BSSs are collocated and operated in the same channel, some collisions may occur. For example, Fig. 1 shows an example of WLAN composed of an access point (AP) and a number of stations (STAs) where the problem of collisions may occur among STAs from different BSSs. As shown in Fig. 1, two OBSSs are represented by the coverage area of the corresponding AP (AP₁ and AP₂). STA_{1,1} and STA_{1,2} belong to the BSS of AP₁. If AP₁ sends a beacon indicating the beginning of the Contention Free Period (CFP), STA_{1,1} and STA_{1,2} will set the NAV to the duration of the CFP. But STA_{2,1,} which is out of the range of AP₁, will not. That means that eventually STA_{2,1,} which belongs to BSS₂, can transmit frames, e.g., RTS/CTS, that can cause a collision with frames sent or received by stations, i.e., STA_{1,1} and STA_{1,2,} belonging to BSS₁ within its coverage area. In addition, a problem arises when STA_{1,1} or STA_{1,2} receives an RTS or a CF-END (+ACK) frame from an Overlapping BSS (from AP₂). In that case, according to the current standard rules, STA_{1,1} and STA_{1,2} may incorrectly reset the NAV if no frame is received after the RTS, and will incorrectly reset the NAV upon reception of the CF-END (+ACK) frame although the frame was not transmitted from its AP.

Accordingly, there exits a need to provide an improved mechanism to avoid potential collisions from the stations in the overlapping BSS.

The present invention provides a wireless MAC protocol to efficiently utilize bandwidth in a wireless LAN by avoiding collisions with stations (STAs) from different overlapping BSSs.

According to one aspect of the invention, a method of avoiding collisions between a plurality of stations located in two or more basic service sets (BSSs) and operating in the same channel is provided. The method includes the steps of: the mobile station receiving a frame, the frame including information indicative of which of basic service units (BSSs) are transmitting the frame to the mobile station; the mobile station updating a first counter when the received frame is determined to be from the same BSS; the mobile station updating a second counter when the received frame is determined to be from an overlapping BSS; and, the mobile station contending for the medium when the first counter and the second counter are idle, wherein the first counter is updated according to a duration specified in the received frame to ensure that the mobile station from its corresponding BSS will not interfere with the transmissions of other mobile stations within its BSS. Meanwhile, the second counter is updated according to a duration specified in the received frame to ensure that the station will not interfere with the transmissions in the overlapping BSS. If the received frame is a request-to-send (RTS) frame, a clear-to-send (CTS) frame is transmitted by the mobile station within its corresponding BSS when the second counter is idle. If the received frame is a CF poll frame from the AP, a data frame by the mobile station is transmitted within its corresponding BSS when the second counter is idle. If the received frame is a frame of any type that requires acknowledgement, an ACK frame is always transmitted by the mobile station, regardless of the value of the counters.

According to another aspect of the invention, a method of operating a wireless local area network (WLAN) of the type having at least one basic service set (BSS) comprised of one access point (AP) and a plurality of mobile stations (STAs) is provided. The method includes the steps of: transmitting a polling frame by the access points to the mobile station, the polling frame including information indicative of the destination address of the frame and which of basic service units are transmitting the polling frame to the mobile station; storing the information indicative of which basic service sets are transmitting the frame to the mobile station and storing the destination address of the polling frame as a transmitting source; updating a first counter of the mobile station according to the duration field specified in the polled frame; receiving a frame by the mobile station, the frame including information indicative of the duration of the next transmission; if the duration of the received frame is longer than the duration of the updated first counter, updating a second counter of the mobile station according to the duration indicated in the received frame; and, the mobile station contending for the medium if the first counter and the second counter indicate an idle state. The mobile station is allowed to contend for the medium if the first counter and the second counter indicate an idle state. The first counter is updated according to a duration specified in the received frame to ensure that the station will not interfere with rest of transmissions in its own BSS. The second counter is updated according to a duration specified in the received frame to ensure that the station will not interfere with the transmission between the stations in the overlapping BSS.

According to another aspect of the invention, a local area network is provided and includes: a plurality of mobile stations, each mobile station having a first counter and a second counter; one access point in communication with the plurality of mobile stations; and, means for updating the first counter and the second counter when any mobile station units receive a frame to ensure that the mobile station will not interfere with the overlapping basic service set (OBSS), wherein the mobile station is allowed to contend for the medium if the first counter and the second counter indicate an idle state. The mobile stations further includes means for utilizing request-to-send-(RTS)/clear-to-send(CTS) exchange to avoid potential interference with the transmission between the mobile station and its corresponding AP following the RTS/CTS exchange.

A further aspect of the invention provides a machine-readable medium having stored thereon data representing sequences of instructions for avoiding collisions from stations (STAs) comprising two or more basic service sets (BSSs) collocated and operating in the same channel, and the sequences of instructions which, when executed by a processor, cause the processor to: receive a frame, the frame including information indicative of which of basic service units are transmitting the frame to the mobile station; update a first counter when the received frame is determined to be from the same BSS; update a second counter when the received frame is determined to be from an overlapping BSS; and, the mobile station contending for the medium when the first counter and the second counter are idle. The first counter is updated according to a duration specified in the received frame to ensure that the mobile station will not interfere with the rest of transmissions in its own BSS. The second counter is updated according to a duration specified in the received frame to ensure that the station will not interfere with the transmissions in overlapping BSS.

A more complete understanding of the method and apparatus of the present invention is available by reference to the following detailed description when taken in conjunction with the accompanying drawings wherein:
Fig. 1 is a schematic diagram depicting a wireless network whereto the embodiment of the present invention may be applied;
Fig. 2 shows the structure of a superframe depicting the coexistence of CFP and CP;
Fig. 3 is a timing diagram of a RTS/CTS exchange during CFP.
Fig. 4 is a flow chart illustrating the operation steps of determining whether a received frame is from the overlapping BSS according to an embodiment of the present invention;
Fig. 5 is a flow chart illustrating the operation steps of determining whether a received frame is from the overlapping BSS according to an embodiment of the present invention; and,
Fig. 6 is a schematic diagram depicting different instances where a station is allowed to transmit according to an embodiment of the present invention.

In the following description, for purposes of explanation rather than limitation, specific details are set forth such as the particular architecture, interfaces, techniques, etc., in order to provide a thorough understanding of the present invention. For purposes of simplicity and clarity, detailed descriptions of well-known devices, circuits, and methods are omitted so as not to obscure the description of the present invention with unnecessary detail.

To help understand the invention, the following definitions are used:
A "Distributed Coordination function (DCF)" is a class of coordination functions where the same coordination function logic is active in every station in the BSS whenever the network is in operation.
A "Point coordination function (PCF)" is a class of possible coordination functions where the coordination function logic is active in only one station in a BSS at any given time that the network is in operation.
A "Contention Free Period (CFP)" is a time period during which frame exchanges occur without intra-BSS contention.
A "Contention Period (CP)" is a time period during the operation of a BSS when a DCF, and the right to transmit is determined locally using a carrier sense multiple access algorithm with collision avoidance (CSMA/CA).
A "Contention Free Period Repetition Interval (CFPRI)" is the duration of a super-frame comprised of the CFP and the CP.
A "Hybrid Coordination Function (HCF)" is a coordination function that combines aspects of the DCF and the PCF to provide the selective handling of the medium access control (MAC) service data units (MSDUs) required for the QoS facility, and allows stations to use a uniform set of frame exchange sequences during both the CFP and the CP.
A "Transmission Opportunity (TXOP)" is an interval of time when a particular station has the right to initiate transmissions onto the wireless medium. A TXOP is defined by a starting time and a maximum duration.
A "Point Coordination Function (PCF) Interframe Space (PIFS)" is a priority level for accessing the wireless medium or a waiting time prior to any frame transmission.

In order to facilitate an understanding of this invention, a conventional method of the IEEE 802.11 MAC protocol will be described herein.

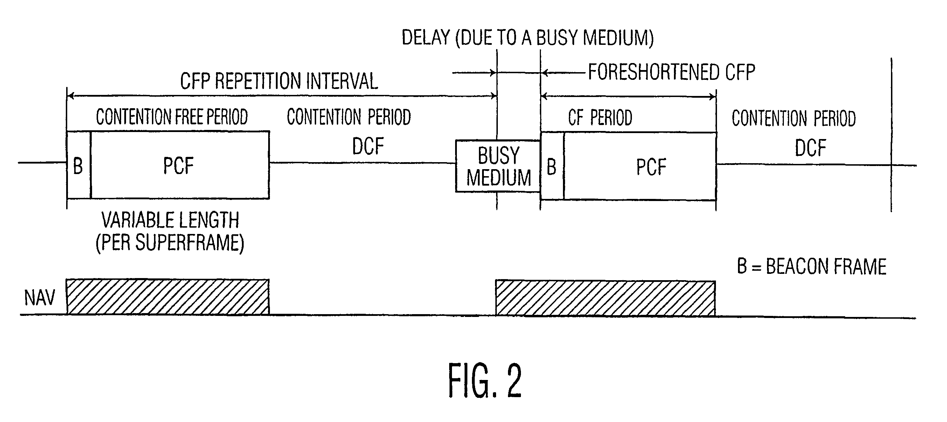

Referring to Fig. 2, the IEEE 802.11 MAC sub-layer defines two functions for accessing the wireless medium: distributed coordination function (DCF) and point coordination function (PCF). The DCF is used to transmit asynchronous data based on Carrier Sense Medium Access with a Collision Avoidance (CSMA/CA) mechanism as described earlier, while the PCF uses a polling mechanism for an isochronous service. Under the PCF access scheme, the transmission time is divided into super-frames, where each super-frame is composed of a Contention Free Period (CFP) and a Contention Period (CP). During the CFP, the PCF is used for accessing the medium, while the DCF is used during the CP. A CFP starts with a beacon frame and finishes with a CF-End frame both sent by the AP. The beacon frame includes the information about the duration of the CFP that is used to update the network allocation vector (NAV) of the STAs as well as the network synchronization information. A Target Beacon Transmission Time (TBTT) indicates the time when the AP attempts to transmit a beacon, so TBTTs repeat every beacon period. As such, the CFPRI is composed of a number of beacon periods.

As described earlier, the Network Allocation Vector (NAV) is defined in IEEE 802.11 as part of the virtual carrier sensing mechanism so that an STA, which is hidden from the transmitter of a frame, would not contend for the channel while the transmitter is occupying the channel. During the CFP, there is no competition for the medium as the NAV of each station sets to non-zero (non-idle). During this time, the station that is polled by the AP can only transmit by overriding the NAV. If the polled STA has any, it will transmit a frame. If the AP receives no response from the polled STA after waiting for a point interframe space (PIFS) interval, the AP may poll the next STA. The HCF of the proposed IEEE 802.11e QoS standard and the PCF in IEEE 802.11-1999 standard relies on the NAV for the operation of the CFP and CP, such that all the STAs other than the one polled by the HCF/HC implemented in the AP are kept silent even though they may not be able to hear from the polled STA.

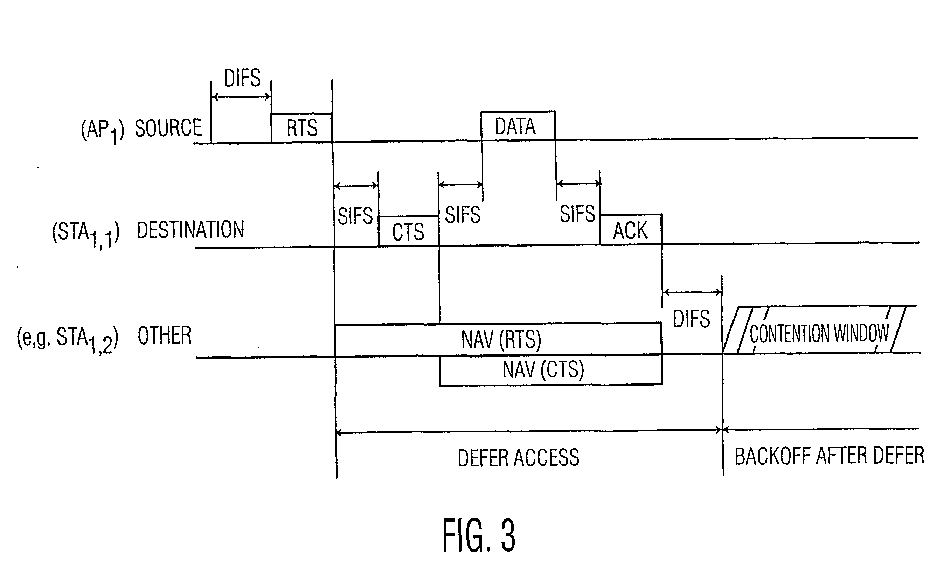

Fig. 3 shows the exchange of the RTS/CTS frames during a CFP as described in the preceding paragraph. As shown in FIG. 3, AP₁ transmits an RTS to the STA_{1,1} to which the STA_{1,1} responses with a CTS. Thereafter, all the STAs, except the intended STA_{1,1}, which received the RTS set their NAV to a busy state for the duration as specified in the received RTS. That is, the STA_{1,2} will set up the NAV with the Duration/ID value in the received RTS frame, and will not interfere with the transmission between STA_{1,1} and AP₁ following the RTS/CTS exchange. At this time, if the STA_{1,2} does not receive any CTS or data frame after receiving the RTS signal for a predetermined time period, the STA_{1,2} will reset its NAV to zero (idle). However, a problem arises at this time if the STA_{1,2} receives an RTS with no subsequent CTS or Data from the STA_{2,1} that is located in the neighboring or overlapping BSS or if the STA_{1,2} receives CF-end poll from AP₂, the STA_{1,2} will reset its NAV to zero (idle). As the STA_{1,2} will react to the frames arrived from an overlapping BSS by resetting its NAV incorrectly, it will cause an interference with the signal exchanges surrounding the AP₁. Moreover, according to the 802.11 PCF mechanism, STA_{2,1} will transmit a frame if it has any data for transmission upon being polled by AP₂ irrespective of the value of its NAV. Such transmission by STA_{2,1} may result in a collision with another transmission during the CFP of STA_{2,1}'s neighboring BSS.

In order to overcome the prior art problem described above, the present invention employs the NAV in conjunction with the inventive new counter, the Overlapping Network Allocation Vector (ONAV), in order to avoid collisions with stations (STAs) from the overlapping basic service sets (BSSs), which is updated within an STA by frames coming from OBSSs, during the Contention Free Period (CFP) or during a Contention Free Burst (CFB) granted by a QoS (+)CF-Poll. That is, each station maintains and updates two sets of counters, the NAV and the ONAV, to make a decision to transmit a frame within its own BSS accordingly. The STAs will be able to update their NAV only according to the medium occupancy in their own BSS, while using the value of the ONAV to avoid collisions with the OBSS and protecting their BSS by sharing the medium with overlapping STAs.

In the embodiment, the ONAV is updated with the same rule of the original/existing conventional methods for updating an NAV as set forth in IEEE 802.11 MAC with one exception. The exception is that the ONAV is updated with the values of the Duration ID/field carried by frames coming from OBSSs only, not the frames from their own BSS. Note that the ONAV is updated only during the CFP and CFB under the HCF operation. In addition, the ONAV requires that if an STA has a non-zero ONAV, the STA will not respond to the QoS (+)CF-poll from its AP.

Now, the provision of avoiding collisions with the OBSS using the ONAV and updating the NAV by the stations according to the medium occupancy in their own BSS is described in detail.

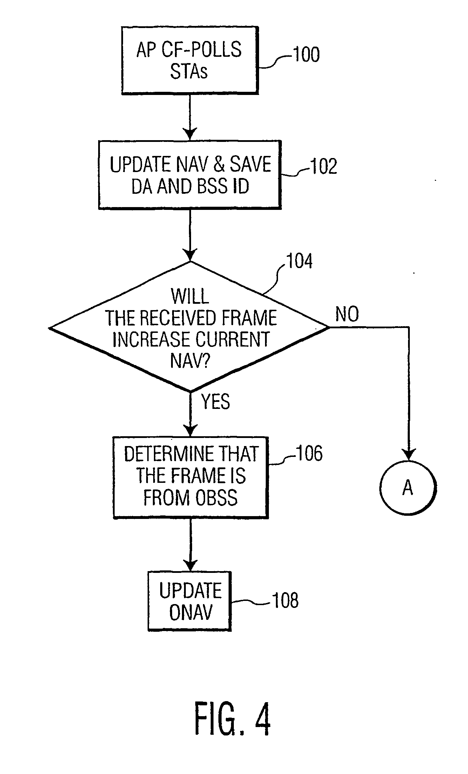

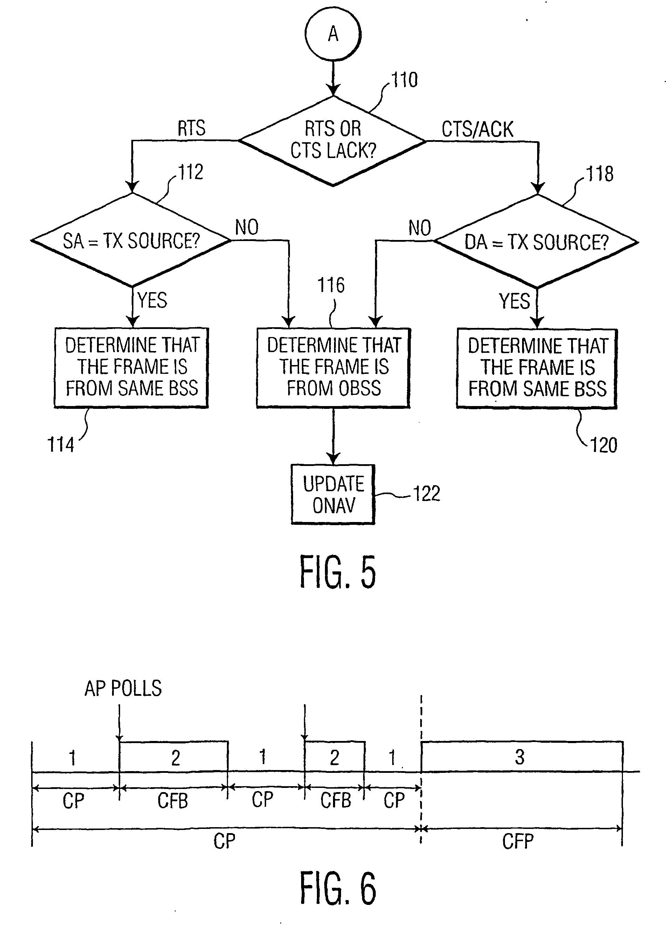

First, the provisions of determining whether the frames are from a neighboring BSS is necessary when maintaining and updating the NAV and the ONAV. As the frames, including the RTS/CTS/ACK, received by a particular station do not contain the BSS ID information, the process of determining such information in accordance with the present invention is explained in reference to Figs. 4 and 5.

Referring to Fig. 4, the updating process initiated when the HC QoS (+)CF-polls every station in step 100. After receiving the QoS (+)CF-Poll in the CP, every STA updates its NAV with the duration of the TXOP granted by the QoS (+)CF-Poll plus DIFS, and saves the value of the Destination Address (DA) and the BSSID carried in the QoS (+)CF-Poll in step 102. The value of DA is saved as a transmission source (TXsrc). In the CFP, the STAs may not update their NAV, but will save the value of the DA (as TXsrc) and the BSSID carried in the QoS (+)CF-Poll.

After receiving the QoS (+)CF-Poll, the STAs are able to differentiate if any frame is coming from their own BSS or not based on the TXsrc information. If an STA receives a frame with a Duration/ID field in step 104, which will increase the NAV value, it is determined that this frame is coming from an OBSS in step 106. As a result, the ONAV is updated in step 108, not the NAV, with the Duration/ID field from the received frame. At the same time, the overlapping BSSID, if available, is saved.

If an STA receives a frame with a Duration/ID field in step 104, which will not increase the NAV value, it is possible that the frame arrived from the same BSS. To determine if the frame was coming from the same BSS, the operation steps described in FIG. 5 are performed, as described below.

In step 110, an STA classifies the reception of a frame into two: an RTS frame and CTS/ACK. The skilled artisan will note that the RTS and CTS/ACK frames do not contain the BSSID field. In step 108, if the received frame is the RTS, the STA can determine that the frame is coming from the same BSS when the source address (SA) of the RTS frame is the same as the TXsrc that was saved recently in step 102. That is, if the SA address of the RTS frame is equal to TXsrc, the frame is considered coming from the same BSS in step 110. Otherwise, it was coming from the OBSS and the STA will update the ONAV with the Duration/ID field from the received frame in step 116.

Meanwhile, if the CTS/ACK frame is received by the station in step 110, the STA can determine that the frame is coming from the same BSS when the Destination address (DA) of the CTS/ACK frame is the same as the TXsrc that was saved recently in step 102. That is, if the DA of the RTS frame is equal to TXsrc, the frame is considered coming from the same BSS in step 120. Otherwise, it was coming from the OBSS and the STA shall update the ONAV in step 116. Here, the DA is used instead of the SA as the CTS/ACK does not contain the SA information.

Finally, once determined that the frame is coming from the OBSS, the ONAV is updated in step 118, not the NAV, with the Duration/ID field from the received frame, but only when the new ONAV value is greater than the current ONAV.

After determining whether frames received by the STA are from the OBSS and updating the ONAV thereafter, each STA is allowed to transmit within its own BSS when both the NAV and the ONAV indicate that the medium is zero or idle (i.e., NAV = ONAV = 0) to avoid collisions due to OBSS. However, there are special instances that an STA may or may not transmit upon reception of QoS (+)CF-Poll, RTS frames and/or frames of a type that requires acknowledgement. FIG. 6 shows three such cases in which an STA is allowed to transmit, in response to a control signal, only upon satisfying certain conditions as set below.

For the non-CFB Contention Period (CP: regions indicated by number 1), a QSTA can response to the RTS with CTS only when the NAV and ONAV of the STA are set equal to zero. If an STA receives a QoS (+)CF-Poll and its NAV and ONAV are equal to zero, the STA is allowed to respond to the QoS (+)CF-Poll if the QoS (+)CF-poll is intended to the STA. Then, the STA sets the NAV according to the duration field indicated in the QoS (+)CF-poll. However, if an STA receives a QoS (+)CF-Poll and its NAV or ONAV is non-zero, the STA cannot reply to the QoS (+)CF-Poll even if it was for itself. Here, the STA saves the maximum value out of (NAV, ONAV) in the ONAV counter but sets the NAV using the Duration/ID field specified in the QoS (+)CF-PoII frame.

For the Contention Free Burst (CFB: regions indicated by number 2), STAs will respond to a QoS (+)CF-Poll and respond to RTS from the TxOP holder with CTS only when the ONAV is zero. It should be noted that NAV is already activated in this region.

For the Contention Free Period (CFP: region indicated by number 3), at TBTT when a CFP is scheduled to start, if an STA has non-zero NAV, then the STA assumes that its NAV was set in the contention period by an OBSS. Thus, the STA will save the maximum value of (NAV, ONAV) in the ONAV counter, but sets the NAV using the dot11CFPMaxDuration/ID field specified in the beacon frame. Here, STAs will respond to a QoS (+)CF-Poll and to an RTS from the TxOP holder with CTS only when the ONAV is zero.

In all three above cases, STAs will always generate an ACK frame, upon successful reception of the frame of a type that requires acknowledgement, without regard to the busy/idle state of the medium.

Having thus described a preferred embodiment for reducing the considerable number of collisions due to an overlapping BSS, it should be apparent to those skilled in the art that certain advantages have been achieved. The concept of ONAV is intended to protect its BSS from the OBSSs as well as to be fair to the OBSSs by not transmitting when the OBSSs need to be protected.

While the preferred embodiments of the present invention have been illustrated and described, it will be understood by those skilled in the art that various changes and modifications may be made, and equivalents may be substituted for elements thereof without departing from the true scope of the present invention. In addition, many modifications may be made to adapt to a particular situation and the teaching of the present invention without departing from the central scope. Therefore, it is intended that the present invention not be limited to the particular embodiment disclosed as the best mode contemplated for carrying out the present invention, but that the present invention include all embodiments falling within the scope of the appended claims.

## Claims

1. A method for avoiding collisions between a plurality of mobile stations (STA_{1,1}, STA_{1,2}, STA_{2,1}) in a wireless local area network (WLAN) including at least two basic service sets (BSSs), where each basic service set includes one access point (AP₁, AP₂) and at least one of the mobile stations in a coverage area of the access point, where a mobile station is part of only one of the basic service sets (BSSs) and the basic service sets (BSSs) operate in the same channel, **characterized in that** the method comprises the steps of:
the mobile station receiving a frame, the frame including information indicative of which of the basic service sets (BSSs) is transmitting the frame to the mobile station;
the mobile station updating a first counter when the received frame is determined to be from the BSS of which the mobile station is part, hereinafter referred to as "own BSS", to ensure that the mobile station will not interfere with a transmission in the own BSS;
the mobile station updating a second counter when the received frame is determined to be from a BSS of which the mobile station does not form part, hereinafter referred to as "overlapping BSS", to ensure that the mobile station will not interfere with a transmission in the overlapping BSS;
determining whether both the first counter and the second counter indicate that the wireless medium is idle; and,
in response to a positive determination, allowing the mobile station to transmit a frame within its own BSS.

2. The method of claim 1, wherein the first counter is updated according to a duration specified in the received frame.

3. The method of claim 2, wherein the received frame is determined to be from the overlapping BSS if the duration specified in the received frame is greater than a previous duration of the first counter upon reception of a QoS (+)CF-Poll frame.

4. The method of claim 1, wherein the second counter is updated according to a duration specified in the received frame.

5. The method of claim 1, further comprising the step of transmitting an acknowledgement by the mobile station in response to the received frame irrespective of the value of the counters.

6. The method of claim 1, wherein, if the received frame is a request-to-send (RTS) frame during a contention period, transmitting a clear-to-send (CTS) frame by the mobile station within its own BSS when the first counter and the second counter are zeros.

7. The method of claim 1, wherein, if the received frame is a request-to-send (RTS) frame during a contention-free period, transmitting a clear-to-send (CTS) frame by the mobile station within its own BSS when the second counter indicates that the medium is idle.

8. The method of claim 1, wherein, if the received frame is a request-to-send (RTS) frame during a contention-free burst, transmitting a clear-to-send (CTS) frame by the mobile station within its own BSS when the second counter indicates that the medium is idle.

9. The method of claim 1, including:
(a) transmitting a polling frame by the at least one of the access points to the mobile station, the polling frame including information indicative of the destination address of the frame and which of basic service sets is transmitting the polling frame to the mobile station;
(b) storing the information indicative of which basic service set is transmitting the frame to the mobile station and storing the destination address of the polling frame as a transmitting source;
(c) updating the first counter according to a duration field specified in the polled frame;
(d) receiving a frame by the mobile station, the frame including information indicative of the duration of the first counter; and
(e) if the duration of the received frame is longer than the duration of the updated first counter, updating the second counter of the mobile station according to the duration indicated in the received frame.

10. The method of claim 9, further comprising the steps of:
determining whether a source address of the received frame is equal to the transmitting source obtained in step (b) if the duration of the received frame is not longer than the duration of the updated first counter; and,
if not, updating the second counter of the mobile station according to the duration indicated in the received frame.

11. The method of claim 9, further comprising the steps of:
determining whether a destination address of the received frame is equal to the transmitting source obtained in step (b) if the duration of the received frame is not longer than the duration of the updated first counter; and,
if not, updating the second counter of the mobile station according to the duration indicated in the received frame.

12. The method of claim 9, further comprising the step of transmitting an acknowledgement by the mobile station within its BSS irrespective of the value of the counters.

13. The method of claim 9, wherein, if the received frame is a request-to-send (RTS) frame during a contention period, transmitting a clear-to-send (CTS) frame by the mobile station within its own BSS when the first counter and the second counter indicate that the medium is idle.

14. The method of claim 9, wherein, if the received frame is a request-to-send (RTS) frame during a contention-free period, transmitting a clear-to-send (CTS) frame by the mobile station within its own BSS when the second counter indicates that the medium is idle.

15. The method of claim 9, wherein, if the received frame is a request-to-send (RTS) frame during a contention-free burst, transmitting a clear-to-send (CTS) frame by the mobile station within its own BSS when the second counter indicates that the medium is idle.

16. The method of claim 9, wherein, if the received frame is a QoS (+)CF poll frame from the AP, transmitting data by the mobile station within its own BSS when the second counter indicates that the medium is idle.

17. A wireless local area network (WLAN) including a plurality of mobile stations (STA_{1,1}, STA_{1,2}, STA_{2,1}) and at least two access points (AP₁, AP₂) arranged in at least two basic service sets (BSSs), where each basic service set includes one of the access points (AP₁, AP₂) and at least one of the mobile stations in a coverage area of the access point, where a mobile station is part of only one of the basic service sets (BSSs) and the basic service sets (BSSs) operate in the same channel, **characterized in that** each of the mobile stations includes:
a first counter and a second counter;
means for receiving a frame, the frame including information indicative of which of the basic service sets (BSSs) is transmitting the frame to the mobile station;
means for updating the first counter when the received frame is determined to be from the BSS of which the mobile station is part, hereinafter referred to as "own BSS", to ensure that the mobile station will not interfere with a transmission in the own BSS;
means for updating the second counter when the received frame is determined to be from a BSS of which the mobile station does not form part, hereinafter referred to as "overlapping BSS", to ensure that the mobile station will not interfere with a transmission in the overlapping BSS; and
means for determining whether both the first counter and the second counter indicate that the wireless medium is idle and, in response to a positive determination, allowing the mobile station to transmit a frame within its own BSS.

18. The network of claim 17, wherein the plurality of mobile stations further comprising means for transmitting an acknowledgement in response to the received frame irrespective of the value of the counters.

19. A machine-readable medium having stored thereon data representing sequences of instructions for avoiding collisions between a plurality of mobile stations (STA_{1,1}, STA_{1,2}, STA_{2,1}) in a wireless local area network (WLAN) including at least two basic service sets (BSSs), where each basic service set includes one access point (AP₁, AP₂) and at least one of the mobile stations in a coverage area of the access point, where a mobile station is part of only one of the basic service sets (BSSs) and the basic service sets (BSSs) operate in the same channel, **characterized in that** the sequences of instructions, when executed by a processor, cause the processor to:
receive a frame, the frame including information indicative of which of the basic service sets (BSSs) is transmitting the frame to the mobile station;
update a first counter when the received frame is determined to be from the BSS of which the mobile station is part, hereinafter referred to as "own BSS", to ensure that the mobile station will not interfere with a transmission in the own BSS;
update a second counter when the received frame is determined to be from a BSS of which the mobile station does not form part, hereinafter referred to as "overlapping BSS", to ensure that the mobile station will not interfere with a transmission in the overlapping BSS;
determine whether both the first counter and the second counter indicate that the wireless medium is idle; and,
in response to a positive determination, allow the mobile station to transmit a frame within its own BSS.

20. The machine-readable medium of claim 19, wherein the first counter is updated according to a duration specified in the received frame.

21. The machine-readable medium of claim 19, wherein the second counter is updated according to a duration specified in the received frame.

22. The machine-readable medium of claim 19, wherein the process is further operative to transmit an acknowledgement by the mobile station in response to the received frame irrespective of the value of the counters.

## Revendications

1. Procédé permettant d'éviter des collisions entre une pluralité de stations mobiles (STA_{1,1}, STA_{1,2}, STA_{2,1}) dans un réseau local sans fil (WLAN) incluant au moins deux ensembles de services de base (BSS), dans lequel chaque ensemble de services de base inclut un point d'accès (AP₁, AP₂) et au moins une des stations mobiles dans une zone de couverture du point d'accès, dans lequel une station mobile ne fait partie que d'un des ensembles de services de base (BSS) et les ensembles de services de base (BSS) fonctionnent sur le même canal, **caractérisé en ce que** le procédé comprend les étapes suivantes :
la réception par la station mobile d'une trame, la trame incluant des informations indicatives de celui parmi les ensembles de services de base (BSS) qui transmet la trame à la station mobile;
la mise à jour par la station mobile d'un premier compteur lorsqu'il est déterminé que la trame reçue provient du BSS dont fait partie la station mobile, appelé ci-après "son propre BSS", pour faire en sorte que la station mobile ne perturbe pas une transmission dans son propre BSS;
la mise à jour par la station mobile d'un deuxième compteur lorsqu'il est déterminé que la trame reçue provient d'un BSS dont ne fait pas partie la station mobile, appelé ci-après "BSS à chevauchement", pour faire en sorte que la station mobile ne perturbe pas une transmission dans le BSS à chevauchement;
le fait de déterminer si le premier compteur et le deuxième compteur indiquent tous deux que le support sans fil est inactif, et
en réponse à une détermination positive, le fait de permettre à la station mobile de transmettre une trame dans son propre BSS.

2. Procédé suivant la revendication 1, dans lequel le premier compteur est mis à jour en fonction d'une durée spécifiée dans la trame reçue.

3. Procédé suivant la revendication 2, dans lequel il est déterminé que la trame reçue provient du BSS à chevauchement si la durée spécifiée dans la trame reçue est supérieure à une durée précédente du premier compteur lors de la réception d'une trame QoS (+)CF-Poll.

4. Procédé suivant la revendication 1, dans lequel le deuxième compteur est mis à jour en fonction d'une durée spécifiée dans la trame reçue.

5. Procédé suivant la revendication 1, comprenant en outre l'étape de transmission d'un accusé de réception par la station mobile en réponse à la trame reçue quelle que soit la valeur des compteurs.

6. Procédé suivant la revendication 1, dans lequel, si la trame reçue est une trame demande pour émettre (RTS) pendant une période de contention, est effectuée la transmission d'une trame prêt à émettre (CTS) par la station mobile dans son propre BSS lorsque le premier compteur et le deuxième compteur sont nuls.

7. Procédé suivant la revendication 1, dans lequel, si la trame reçue est une trame demande pour émettre (RTS) pendant une période sans contention, est effectuée la transmission d'une trame prêt à émettre (CTS) par la station mobile dans son propre BSS lorsque le deuxième compteur indique que le support est inactif.

8. Procédé suivant la revendication 1, dans lequel, si la trame reçue est une trame demande pour émettre (RTS) pendant une salve sans contention, est effectuée la transmission d'une trame prêt à émettre (CTS) par la station mobile dans son propre BSS lorsque le deuxième compteur indique que le support est inactif.

9. Procédé suivant la revendication 1, comprenant :
(a) la transmission d'une trame d'interrogation par le au moins un des points d'accès à la station mobile, la trame d'interrogation incluant des informations indicatives de l'adresse de destination de la trame et celui parmi les ensembles de services de base qui transmet la trame d'interrogation à la station mobile;
(b) le stockage des informations indicatives de l'ensemble de services de base qui transmet la trame à la station mobile et le stockage de l'adresse de destination de la trame d'interrogation comme source émettrice;
(c) la mise à jour du premier compteur en fonction d'un champ de durée spécifié dans la trame interrogée;
(d) la réception d'une trame par la station mobile, la trame incluant des informations indicatives de la durée du premier compteur, et
(e) si la durée de la trame reçue est supérieure à la durée du premier compteur mis à jour, la mise à jour du deuxième compteur de la station mobile en fonction de la durée indiquée dans la trame reçue.

10. Procédé suivant la revendication 9, comprenant en outre les étapes suivantes :
le fait de déterminer si une adresse de source de la trame reçue est égale à la source émettrice obtenue à l'étape (b) si la durée de la trame reçue n'est pas supérieure à la durée du premier compteur mis à jour, et
si ce n'est pas le cas, la mise à jour du deuxième compteur de la station mobile en fonction de la durée indiquée dans la trame reçue.

11. Procédé suivant la revendication 9, comprenant en outre les étapes suivantes :
le fait de déterminer si une adresse de destination de la trame reçue est égale à la source émettrice obtenue à l'étape (b) si la durée de la trame reçue n'est pas supérieure à la durée du premier compteur mis à jour, et
si ce n'est pas le cas, la mise à jour du deuxième compteur de la station mobile en fonction de la durée indiquée dans la trame reçue.

12. Procédé suivant la revendication 9, comprenant en outre l'étape de transmission d'un accusé de réception par la station mobile dans son BSS quelle que soit la valeur des compteurs.

13. Procédé suivant la revendication 9, dans lequel, si la trame reçue est une trame demande pour émettre (RTS) pendant une période de contention, est effectuée la transmission d'une trame prêt à émettre (CTS) par la station mobile dans son propre BSS lorsque le premier compteur et le deuxième compteur indiquent que le support est inactif.

14. Procédé suivant la revendication 9, dans lequel, si la trame reçue est une trame demande pour émettre (RTS) pendant une période sans contention, est effectuée la transmission d'une trame prêt à émettre (CTS) par la station mobile dans son propre BSS lorsque le deuxième compteur indique que le support est inactif.

15. Procédé suivant la revendication 9, dans lequel, si la trame reçue est une trame demande pour émettre (RTS) pendant une salve sans contention, est effectuée la transmission d'une trame prêt à émettre (CTS) par la station mobile dans son propre BSS lorsque le deuxième compteur indique que le support est inactif.

16. Procédé suivant la revendication 9, dans lequel, si la trame reçue est une trame Qos (+)CF Poll provenant de l'AP, est effectuée la transmission de données par la station mobile dans son propre BSS lorsque le deuxième compteur indique que le support est inactif.

17. Réseau local sans fil (WLAN) incluant une pluralité de stations mobiles (STA_{1,1}, STA_{1,2}, STA_{2,1}) et au moins deux points d'accès (AP₁, AP₂) disposés dans au moins deux ensembles de services de base (BSS), dans lequel chaque ensemble de services de base inclut un des points d'accès (AP₁, AP₂) et au moins une des stations mobiles dans une zone de couverture du point d'accès, dans lequel une station mobile ne fait partie que d'un des ensembles de services de base (BSS) et les ensembles de services de base (BSS) fonctionnent sur le même canal, **caractérisé en ce que** chacune des stations mobiles comprend :
un premier compteur et un deuxième compteur;
des moyens pour recevoir une trame, la trame incluant des informations indicatives de celui parmi les ensembles de services de base (BSS) qui transmet la trame à la station mobile;
des moyens pour mettre à jour le premier compteur lorsqu'il est déterminé que la trame reçue provient du BSS dont fait partie la station mobile, appelé ci-après "son propre BSS", pour faire en sorte que la station mobile ne perturbe pas une transmission dans son propre BSS;
des moyens pour mettre à jour le deuxième compteur lorsqu'il est déterminé que la trame reçue provient d'un BSS dont ne fait pas partie la station mobile, appelé ci-après "BSS à chevauchement", pour faire en sorte que la station mobile ne perturbe pas une transmission dans le BSS à chevauchement, et
des moyens pour déterminer si le premier compteur et le deuxième compteur indiquent tous deux que le support sans fil est inactif et, en réponse à une détermination positive, permettre à la station mobile de transmettre une trame dans son propre BSS.

18. Réseau suivant la revendication 17, dans lequel la pluralité de stations mobiles comprennent en outre des moyens pour transmettre un accusé de réception en réponse à la trame reçue quelle que soit la valeur des compteurs.

19. Support lisible par une machine sur lequel sont stockées des données représentant des séquences d'instructions pour éviter des collisions entre une pluralité de stations mobiles (STA_{1,1}, STA_{1,2}, STA_{2,1}) dans un réseau local sans fil (WLAN) incluant au moins deux ensembles de services de base (BSS), dans lequel chaque ensemble de services de base inclut un point d'accès (AP₁, AP₂) et au moins une des stations mobiles dans une zone de couverture du point d'accès, dans lequel une station mobile ne fait partie que d'un des ensembles de services de base (BSS) et les ensembles de services de base (BSS) fonctionnent sur le même canal, **caractérisé en ce que** les séquences d'instructions, lorsqu'elles sont exécutées par un processeur, amènent le processeur à :
recevoir une trame, la trame incluant des informations indicatives de celui parmi les ensembles de services de base (BSS) qui transmet la trame à la station mobile;
mettre à jour un premier compteur lorsqu'il est déterminé que la trame reçue provient du BSS dont fait partie la station mobile, appelé ci-après "son propre BSS", pour faire en sorte que la station mobile ne perturbe pas une transmission dans son propre BSS;
mettre à jour un deuxième compteur lorsqu'il est déterminé que la trame reçue provient d'un BSS dont ne fait pas partie la station mobile, appelé ci-après "BSS à chevauchement", pour faire en sorte que la station mobile ne perturbe pas une transmission dans le BSS à chevauchement;
déterminer si le premier compteur et le deuxième compteur indiquent tous deux que le support sans fil est inactif, et
en réponse à une détermination positive, permettre à la station mobile de transmettre une trame dans son propre BSS.

20. Support lisible par une machine suivant la revendication 19, dans lequel le premier compteur est mis à jour en fonction d'une durée spécifiée dans la trame reçue.

21. Support lisible par une machine suivant la revendication 19, dans lequel le deuxième compteur est mis à jour en fonction d'une durée spécifiée dans la trame reçue.

22. Support lisible par une machine suivant la revendication 19, dans lequel le procédé sert en outre à transmettre un accusé de réception par la station mobile en réponse à la trame reçue quelle que soit la valeur des compteurs.

## Patentansprüche

1. Verfahren zum Vermeiden von Kollisionen zwischen einer Anzahl mobiler Stationen (STA_{1,1}, STA_{1,2}, STA_{2,1}) in einem drahtlosen lokalen Netzwerk (WLAN) mit wenigstens zwei Basisdienstsätzen (BSS), wobei jeder Basisdienstsatz eine Zugriffstelle (AP₁, AP₂) und wenigstens eine der mobilen Stationen in einem Deckungsgebiet der Zugriffstelle umfasst, wobei eine Mobilstation ein Teil nur eines der Basisdienstsätze (BSS) ist und die Basisdienstsätze (BSS) über denselben Kanal arbeiten, **dadurch gekennzeichnet, dass** das Verfahren die nachfolgenden Verfahrensschritte aufweist:
- die Mobilstation empfängt ein Frame, wobei das Frame Information aufweist, die angibt, welcher Basisdienstsatz der Basisdienstsätze (BSS) das Frame zu der mobilen Station überträgt:
- die Mobilstation aktualisiert einen ersten Zähler, wenn ermittelt wird, dass das empfangene Frame von dem BSS herrührt, von dem die mobile Station ein Teil ist, nachstehend als "eigener BSS" bezeichnet, um zu gewährleisten, dass die mobile Station eine Übertragung in dem eigenen BSS nicht stört,
- die Mobilstation aktualisiert einen zweiten Zähler, wenn ermittelt wird, dass das empfangene Frame von einem BSS herrührt, von dem die mobile Station kein Teil ist, nachstehend als "überlappender BSS" bezeichnet, um zu gewährleisten, dass die mobile Station eine Übertragung in dem überlappenden BSS nicht stört;
- das Ermitteln, ob der erste Zähler und der zweite Zähler angeben, dass das drahtlose Medium untätig ist; und
- in Reaktion auf eine positive Ermittlung das Ermöglichen, dass die mobile Station ein Frame innerhalb des eigenen BSS überträgt.

2. Verfahren nach Anspruch 1, wobei der erste Zähler entsprechend einer in dem empfangenen Frame spezifizierten Dauer.

3. Verfahren nach Anspruch 2, wobei ermittelt wird, dass das empfangene Frame von dem überlappenden BSS herrührt, wenn die in dem empfangenen Frame spezifizierte Dauer größer ist als eine vorbestimmte Dauer des ersten Zählers bei Empfang eines QoS (+)CF-Poll Frames.

4. Verfahren nach Anspruch 1, wobei der zweite Zähler entsprechend einer in dem empfangenen Frame spezifizierten Daueraktualisiert wird.

5. Verfahren nach Anspruch 1, das weiterhin den Schritt aufweise der Übertragung einer Bestätigung durch die mobile Station in Reaktion auf das empfangene Frame, ungeachtet des Wertes des Zählers.

6. Verfahren nach Anspruch 1, wobei, wenn das empfangene Frame ein Antrag-zum-Senden (RTS) Frame während einer Verbindungsperiode ist, die Übertragung eines Frei-zum-Senden (CTS) Frames durch die mobile Station innerhalb des eigenen BSS, wenn der erste Zähler und der zweite Zähler Null sind.

7. Verfahren nach Anspruch 1, wobei, wenn das empfangene Frame ein Antrag-zum-Senden (RTS) Frame während einer streitigkeitsfreien Periode ist, die Übertragung eines Frei-zum-Senden (CTS) Frames durch die mobile Station innerhalb des eigenen BSS, wenn der zweite Zähler angibt, dass das Medium untätig ist.

8. Verfahren nach Anspruch 1, wobei, wenn das empfangene Frame ein Antrag-zum-Senden (RTS) Frame während eines streitigkeitsfreien Bursts ist, die Übertragung eines Frei-zum-Senden (CTS) Frames durch die mobile Station innerhalb des eigenen BSS, wenn der zweite Zähler angibt, dass das Medium untätig ist.

9. Verfahren nach Anspruch 1, das Folgendes umfasst:
(a) das Übertragen eines Aufruf-Frames durch die wenigstens eine Zugriffstelle zu der mobilen Station, wobei das Aufruf-Frame Information über die Zieladresse des Frames umfasst und welcher der Basisdienstsätze das Aufruf-Frame zu der mobilen Station überträgt;
(b) das Speichern der Information, die angibt, welcher Basisdienstsatz das Frame zu der mobilen Station überträgt, und das Speichern der Zieladresse des Aufruf-Frames als eine Übertragungsquelle;
(c) das Aktualisieren des ersten Zählers entsprechend einem in dem aufgerufenen Frame spezifizierten Dauerfeld;
(d) das Empfangen eines Frames durch die mobile Station, wobei das Frame Information aufweist über die Dauer des ersten Zählers; und
(e) wenn die Dauer des empfangenen Frames länger ist als die Dauer des aktualisierten ersten Zählers, das Aktualisieren des zweiten Zählers der mobilen Station entsprechend der in dem empfangenen Frame angegebenen Dauer.

10. Verfahren nach Anspruch 9, wobei dieses Verfahren weiterhin die nachfolgenden Verfahrensschritte umfasst:
- das Ermitteln, ob eine Quellenadresse des empfangenen Frames der in dem Schritt (b) erhaltenen übertragenden Adresse entspricht, wenn das empfangene Frame nicht länger ist als die Dauer des aktualisierten ersten Zählers; und
- wenn nicht, das Aktualisieren des zweiten Zählers der mobilen Station entsprechend der in dem empfangenen Frame angegebenen Dauer.

11. Verfahren nach Anspruch 9, wobei dieses Verfahren weiterhin die nachfolgenden Verfahrensschritte umfasst:
- das Ermitteln, ob eine Zieladresse des empfangenen Frames der übertragenen in dem Verfahrensschritt (b) erhaltenen Übertragungsquelle entspricht, wenn die Dauer des empfangenen Frames nicht länger ist als die Dauer des aktualisierten ersten Zählers; und
- wenn nicht, das Aktualisieren des zweiten Zählers der mobilen Station entsprechend der in dem empfangenen Frame angegebenen Dauer.

12. Verfahren nach Anspruch 9, weiterhin mit dem Schritt der Übertragung einer Bestätigung durch die mobile Station innerhalb des BSS, ungeachtet des Wertes der Zähler.

13. Verfahren nach Anspruch 9, wobei, wenn das empfangene Frame ein Antrag-zum-Senden (RTS) Frame während einer Verbindungsperiode ist, die Übertragung eines Frei-zum-Senden (CTS) Frames durch die mobile Station innerhalb des eigenen BSS, wenn der erste Zähler und der zweite Zähler angeben, dass das Medium untätig ist.

14. Verfahren nach Anspruch 9, wobei, wenn das empfangene Frame ein Antrag-zum-Senden (RTS) Frame während einer streitigkeitsfreien Periode ist, die Übertragung eines Frei-zum-Senden (CTS) Frames durch die mobile Station innerhalb des eigenen BSS, wenn der zweite Zähler angibt, dass das Medium untätig ist.

15. Verfahren nach Anspruch 9, wobei, wenn das empfangene Frame ein Antrag-zum-Senden (RTS) Frame während eines streitigkeitsfreien Bursts ist, die Übertragung eines Frei-zum-Senden (CTS) Frames durch die mobile Station innerhalb des eigenen BSS, wenn der zweite Zähler angibt, dass das Medium untätig ist.

16. Verfahren nach Anspruch 9, wobei, wenn das empfangene Frame ein QoS (+)CF Aufruf-Frame von der AP ist, die Übertragung von Daten durch die mobile Station innerhalb des eigenen BSS, wenn der zweite Zähler angibt, dass das Medium untätig ist.

17. Drahtloses lokales Netzwerk (WLAN) mit einer Anzahl mobiler Stationen (STA_{1,1}, STA_{1,2}, STA_{2,1}) und wenigstens zwei Zugriffstellen (AP₁, AP₂, vorgesehen in wenigstens zwei Basisdienstsätzen (BSS), wobei jeder Basisdienstsatz eine der Zugriffstellen (AP₁, AP₂) und wenigstens eine der mobilen Stationen in einem Deckungsgebiet der Zugriffstelle umfasst, wobei eine mobile Station ein Teil nur eines Basisdienstsatzes der Basisdienstsätze (BSS) ist und die Basisdienstsätze (BSS) über denselben Kanal arbeiten, **dadurch gekennzeichnet, dass** jede der mobilen Stationen Folgendes umfasst:
- einen ersten Zähler und einen zweiten Zähler;
- Mittel zum Empfangen eines Frames, wobei das Frame Information enthält, die angibt, welcher der Basisdienstsätze (BSS) das Frame zu der mobilen Station überträgt;
- Mittel zum Aktualisieren des ersten Zählers, wenn ermittelt wird, dass das empfangene Frame von dem BSS herrührt, von dem die mobile Station ein Teil ist, nachstehend als "eigener BSS" bezeichnet, um zu gewährleisten, dass die mobile Station eine Übertragung in dem eigenen BSS nicht stört;
- Mittel zum Aktualisieren des zweiten Zählers, wenn ermittelt wird, dass das empfangene Frame von einem BSS herrührt, von dem die mobile Station kein Teil ist, nachstehend als "überlappender BSS" bezeichnet, um zu gewährleisten, dass die mobile Station eine Übertragung in dem überlappenden BSS nicht stört; und
- Mittel um zu ermitteln, ob der erste Zähler und der zweite Zähler angeben, dass das drahtlose Medium untätig ist, und in Reaktion auf eine positive Ermittlung, ermöglichen, dass die mobile Station ein Frame in dem eigenen BSS überträgt.

18. Netzwerk nach Anspruch 17, wobei die Anzahl mobile Stationen weiterhin Mittel aufweisen zum Übertragen einer Bestätigung in Reaktion auf das empfangene Frame, ungeachtet des Wertes der Zähler.

19. Von einer Maschine auslesbares Medium, auf dem Daten gespeichert sind, die Sequenzen von Instruktionen darstellen um Kollisionen zwischen einer Anzahl mobiler Stationen (STA_{1,1}, STA_{1,2}, STA_{2,1}) in einem drahtlosen lokalen Netzwerk (WLAN) mit wenigstens zwei Basisdienstsätzen (BSS) zu vermeiden, wobei jeder Basisdienstsatz eine Zugriffstelle (AP₁, AP₂) und wenigstens eine der mobilen Stationen in einem Deckungsgebiet der Zugriffstelle enthält, wobei eine mobile Station ein Teil nur eines Satzes der Basisdienstsätze (BSS) ist und die Basisdienstsätze (BSS) in demselben Kanal arbeiten, **dadurch gekennzeichnet, dass** die Folgen von Instruktionen, wenn durch einen Prozessor durchgeführt, dafür sorgen, dass der Prozessor wie folgt verfährt:
- das Empfangen eines Frames, wobei das Frame Information enthält, die angibt, welcher Basisdienstsatz (BSS) das Frame zu der mobilen Station überträgt;
- das Aktualisieren eines ersten Zählers, wenn ermittelt wird, dass das empfangene Frame von dem BSS herrührt, von dem die mobile Station ein Teil ist, nachstehend als "eigener BSS" bezeichnet, um zu gewährleisten, dass die mobile Station eine Übertragung in dem eigenen BSS nicht stört;
- das Aktualisieren eines zweiten Zählers, wenn ermittelt wird, dass das empfangene Frame von einem BSS herrührt, von dem die mobile Station nicht ein Teil ist, nachstehend als "überlappender BSS" bezeichnet, um zu gewährleisten, dass die mobile Station eine Übertragung in dem überlappenden BSS nicht stört;
- das Ermitteln, ob der erste und der zweite Zähler angeben, dass das drahtlose Medium untätig ist; und
- in Reaktion auf eine positive Ermittlung, das Ermöglichen, dass eine mobile Station ein Frame innerhalb des eigenen BSS überträgt.

20. Von einer Maschine auslesbares Medium nach Anspruch 19, wobei der erste Zähler entsprechend einer in dem empfangenen Frame spezifizierten Dauer aktualisiert wird.

21. Von einer Maschine auslesbares Medium nach Anspruch 19, wobei der zweite Zähler entsprechend einer in dem empfangenen Frame spezifizierten Dauer aktualisiert wird.

22. Vo einer Maschine auslesbares Medium nach Anspruch 19, wobei der Prozess weiterhin wirksam ist zum Übertragen einer Bestätigung durch die mobile Station in Reaktion auf des empfangene Frame, ungeachtet des Wertes der Zähler.
